# EUROPÄISCHE PATENTANMELDUNG

(11) **EP 1 675 005 A2**
(43) Veröffentlichungstag der Anmeldung: **28.06.2006**
(21) Anmeldenummer: 05028223.5
(22) Anmeldetag: 22.12.2005
(51) Int. Cl.: G06F 11/16

(54) **Verfahren zur Sicherstellung der Verfügbarkeit von Daten auf lokalen Massenspeichern**

(30) Priorität: 23.12.2004 DE 102004062292
(71) Anmelder: Fujitsu Siemens Computers GmbH, 80807 München (DE)
(72) Erfinder: Hartung, Klaus, 33154 Salzkotten (DE)
(74) Vertreter: Epping - Hermann - Fischer

(57) **Zusammenfassung**

Die Erfindung betrifft ein Verfahren zur Sicherstellung der Verfügbarkeit von Daten (11) bei einer Anordnung mit einem ersten Rechner (1a) und mindestens einem zweiten Rechner (1b), die jeweils einen lokalen, nicht-flüchtigen Massenspeicher (3a,b) aufweisen, bei Ausfall von mindestens einem der Rechner (1). Das Verfahren ist dadurch gekennzeichnet, dass Daten (11), die in dem lokalen, nicht-flüchtigen Massenspeicher (3a) des ersten Rechners (1a) gespeichert sind, redundant in dem lokalen, nicht-flüchtigen Massenspeicher (3b) des mindestens einen zweiten Rechners (1b) abgelegt werden und eine Recheneinheit (5b) des mindestens einen zweiten Rechners (1b) Zugriff auf die redundant abgelegten Daten (11) hat, und Daten (11), die in dem lokalen, nicht-flüchtigen Massenspeicher (3b) des mindestens einen zweiten Rechners (1b) gespeichert sind, redundant in dem lokalen, nicht-flüchtigen Massenspeicher (3a) des ersten Rechners (1a) abgelegt werden und eine Recheneinheit (5a) des ersten Rechners (1a) Zugriff auf die redundant abgelegten Daten (11) hat.

## Beschreibung

Die Erfindung betrifft ein Verfahren zur Sicherstellung der Verfügbarkeit von Daten bei einer Anordnung mit mindestens zwei Rechnern, die jeweils einen lokalen nichtflüchtigen Massenspeicher aufweisen, bei Ausfall von mindestens einem der Rechner.

Für Anwendungen, die auf einem einzelnen Rechner ablaufen, kann im Allgemeinen keine Hochverfügbarkeit sichergestellt werden. Deshalb laufen besonders wichtige Anwendungen, insbesondere zentrale Serveranwendungen, im Allgemeinen auf redundanten Serverrechnern ab. Eine Anwendung kann dabei von jedem der redundanten Rechner ausgeführt werden, sodass beim Ausfall eines einzelnen Rechners die Anwendung weiterhin zur Verfügung steht. Um die von der Anwendung benötigten Daten rechnerübergreifend zur Verfügung zu stellen, werden separate Datennetzwerke (SAN - Storage Area Networks) eingesetzt. Solche Speichereinrichtungen sind relativ teuer und erfordern den Einsatz besonderer Software. Dabei müssen sowohl auf Seite der Speichereinrichtungen als auch auf Seite der zugreifenden Rechner spezielle Programme eingerichtet werden, die den Zugriff auf das Datennetzwerk regeln.

Beim Einsatz umfangreicher Anwendungen und vieler gekoppelter Rechner ist eine solche Aufteilung in ein Speichernetzwerk und eine Anordnung bestehend aus vielen redundanten Serverrechnern (Serverfarm) sinnvoll. Die Kosten für das SAN haben dann nur eine untergeordnete Bedeutung. In Fällen, wo die Anzahl der redundanten Serverrechner klein ist, beispielsweise wenn nur eine oder nur wenige Anwendungen hochverfügbar zur Verfügung gestellt werden, und auch die Menge der von den Anwendungen benötigten Daten klein ist, sodass sie insbesondere auf einer einzigen Festplatte untergebracht werden können, ist eine Aufteilung in ein separates Datennetzwerk und eine Serverfarm meist unwirtschaftlich. Die Kosten für die Hochverfügbarkeit werden wesentlich durch die Sicherstellung der Verfügbarkeit der Daten bestimmt.

Der Erfindung liegt daher die Aufgabe zugrunde, bei einer Anordnung mehrerer gekoppelter Rechner ein kostengünstiges Verfahren zur Sicherstellung der Verfügbarkeit von Daten zu entwickeln.

Die Aufgabe wird erfindungsgemäß dadurch gelöst, dass Daten, die in dem lokalen, nichtflüchtigen Massenspeicher eines ersten Rechners gespeichert sind, redundant in dem lokalen nichtflüchtigen Massenspeicher eines mindestens zweiten Rechners abgelegt werden, wobei eine Recheneinheit des mindestens einen zweiten Rechners Zugriff auf die redundant abgelegten Daten hat. Umgekehrt werden Daten, die in dem lokalen, nichtflüchtigen Massenspeicher des mindestens einen zweiten Rechners gespeichert sind, redundant in dem lokalen, nichtflüchtigen Massenspeicher des ersten Rechners abgelegt, wobei eine Recheneinheit des ersten Rechners Zugriff auf die redundant abgelegten Daten hat.

Durch diese wechselseitige Spiegelung von Daten wird eine Redundanz der Daten auf mindestens zwei Rechnern erreicht. Dadurch steht beim Ausfall eines der Rechner wenigstens ein weiterer Rechner zur Verfügung, der über dieselben Daten verfügt. Dieser Rechner kann daher die Anwendung oder die Anwendungen, die auf dem ausgefallenen Rechner liefen, fortsetzen und stellt somit die Hochverfügbarkeit der Anwendungen zur Verfügung, ohne dass dadurch ein SAN erforderlich ist.

Das erfindungsgemäße Verfahren ermöglicht, den ohnehin vorhandenen Speicherplatz der Rechner auch als Datenspeicher für die laufenden Anwendungen zu nutzen. Auf den Einsatz weiterer Hardware kann daher verzichtet werden. Des weiteren ist vorteilhaft, dass bei einer solchen Anordnung standardisierte Software zur Übertragung von Daten des einen Massenspeichers zu dem anderen Massenspeicher eingesetzt werden kann. Als Zusatzsoftware wird daher nur eine Software benötigt, die den Abgleich zwischen lokalen Daten und dem lokalen Spiegelbild der entfernten Daten übernimmt.

Das erfindungsgemäße Verfahren ist insbesondere dann vorteilhaft, wenn nur eine einzige Anwendung wahlweise auf einem von zwei Rechnern ablaufen soll. In einer solchen Anordnung ist jeweils nur ein Rechner aktiv, der direkt auf die Daten des lokalen Massenspeichers zugreifen kann. Ein ebenfalls auf diesem Rechner laufender Synchronisationsprozess übernimmt die Übertragung der geänderten Daten auf das lokale Spiegelbild des Massenspeichers des jeweils anderen Computers. Dabei kann zum Beispiel das Netzwerkdateisystem NFS (Network File System), das lizenzfrei zur Verfügung steht, die Übertragung der Daten auf den jeweils anderen Rechner übernehmen. Fällt der erste, aktive Rechner aus, wird der jeweils andere bis dahin inaktive Rechner zum aktiven Rechner und übernimmt die Ausführung der Anwendung.

Weitere vorteilhafte Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
Figur 1 eine schematische Darstellung eines Ausführungsbeispieles einer erfindungsgemäßen Anordnung,
Figur 2 ein Datenflussdiagramm für das Ausführungsbeispiel,
Figur 3 ein beispielhaftes Ablaufdiagramm einer Transaktion bestehend aus drei Datenänderungen.

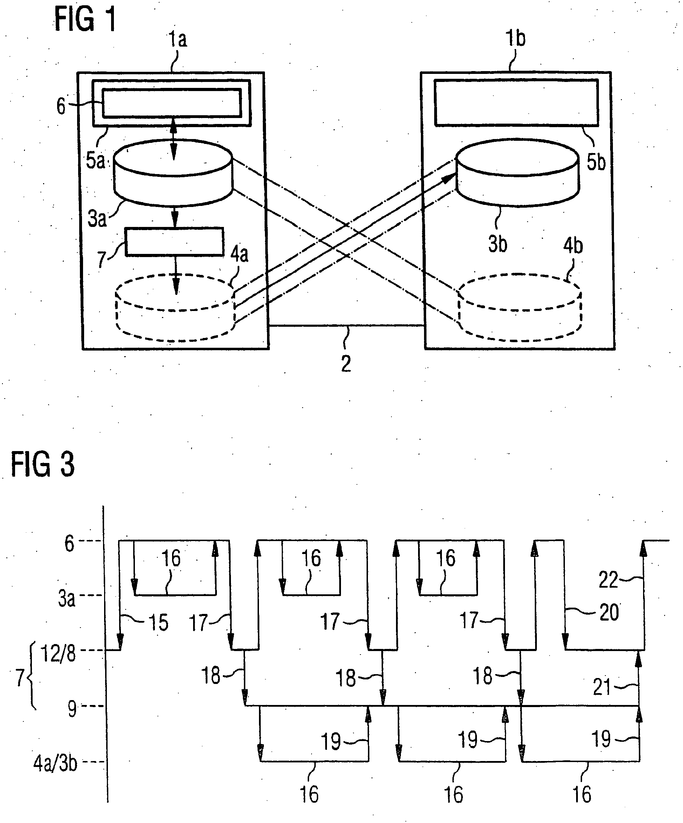

Figur 1 zeigt eine Anordnung bestehend aus zwei Rechnern 1a und 1b, die mit einer Kommunikationsverbindung 2 verbunden sind. Jeder der Rechner 1a und 1b besitzt einen Massenspeicher 3a bzw. 3b, eine Spiegelung 4a bzw. 4b des Massenspeichers 3b bzw. 3a des jeweils anderen Rechners 1b bzw. 1a sowie eine Recheneinheit 5a bzw. 5b. Um eine Unterscheidung der Komponenten des ersten Rechners 1a von gleichartigen Komponenten des zweiten Rechners 1b zu ermöglichen, wird den Bezugszeichen des ersten Rechners 1a jeweils ein a, den Bezugszeichen des zweiten Rechners 1b jeweils ein b nachgestellt. Im Ausführungsbeispiel führt der erste Rechner 1a eine Anwendung 6 aus. Dabei ändert die Anwendung 6 die Daten auf dem Massenspeicher 3a. Die Änderungen des Massenspeichers 3a werden von einem Synchronisierungsprozess 7 auf das Spiegelbild 4a und damit auf den Massenspeicher 3b des anderen Rechners 1b übertragen.

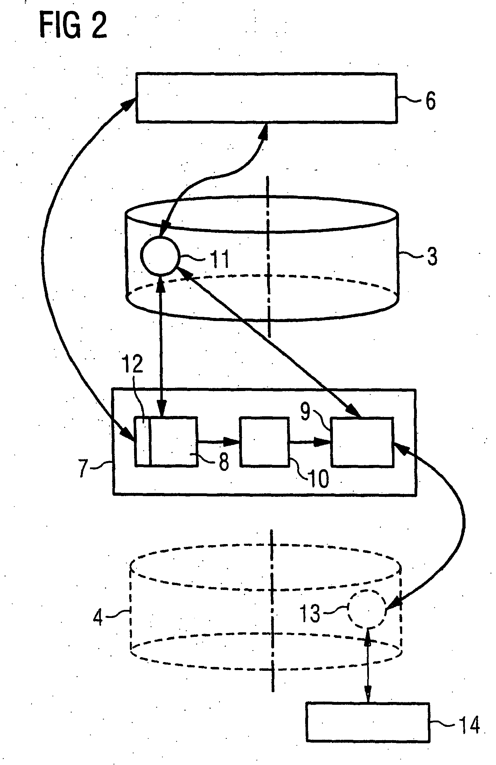

Figur 2 zeigt ein schematisches Datenflussdiagramm zwischen einer Anwendung 6, einem lokalen Massenspeicher 3a, einem Spiegelbild 4a des Massenspeichers 3b des entfernten Rechners 1b und einem Synchronisationsprozess 7. Der Synchronisationsprozess 7 besteht aus einer ersten Prozessstufe 8, einer zweiten Prozessstufe 9 und einem zwischengeschalteten Pufferspeicher 10. Die Anwendung 6 verarbeitet Daten 11 des lokalen Massenspeichers 3a und meldet Änderungen an den bestehenden Daten 11 über eine Schnittstelle 12 an den Synchronisationsprozess 7. Dabei nimmt die erste Prozessstufe 8 Anfragen der Anwendung 6 über die Schnittstelle 12 entgegen. Die von der Anwendung 6 an die Prozessstufe 8 übergebenen Verweise auf die geänderten Daten 11, beispielsweise in Form von Pfadnamen, werden in den Pufferspeicher 10 eingetragen. Die zweite Prozessstufe 9 liest dann die zu den Einträgen des Pufferspeichers 10 gehörenden Daten 11 vom Massenspeicher 3a und überträgt sie als gespiegelte Daten 13 auf das lokale Spiegelbild 4a des entfernten Massenspeichers 3b. Dabei übernimmt ein auf dem Rechner 1a zur Verfügung stehendes Netzwerkdateisystem 14 die Übertragung auf den entfernten Massenspeicher 3b.

Durch den Pufferspeicher 10 wird eine weitgehende Abkopplung der Anwendung 6 von der Datenübertragung durch das Netzwerkdateisystem 14 bewirkt. Die erste Prozessstufe 8 des Synchronisierungsprozesses 7 nimmt über die Schnittstelle 12 lediglich Verweise auf die geänderten Daten 11 von der Anwendung 6 entgegen und trägt diese Verweise in den Pufferspeicher 10 ein. Die Anwendung 6 kann unmittelbar nach dieser Operation weiterarbeiten und muss nicht auf die Datenübertragung der geänderten Daten 11 als gespiegelte Daten 13 warten. In einer vorteilhaften Ausführung der Erfindung werden die Einträge des Pufferspeichers 10 sortiert, sodass bei mehrmaligen Änderungen an denselben Daten 11 innerhalb eines kurzen Zeitraums, nur die jeweils letzte Änderung an das Spiegelbild 4a des entfernten Massenspeichers 3b übertragen wird.

Um die Konsistenz der Daten bei Ausfall des Rechnersystems 1a zu gewährleisten, sollten Änderungen an den Daten 11 des Massenspeichers 3a transaktionsorientiert durchgeführt werden. Figur 3 zeigt einen beispielhaften Ablauf einer Transaktion bestehend aus 3 Datenänderungen 16. Dabei legt die Anwendung 6 zunächst den Beginn 15 einer Transaktion fest. Jede der darauf folgenden Änderungen 16 der Daten 11 auf dem lokalen Massenspeicher 3a wird durch eine gesonderte Meldung 17 über die Schnittstelle 12 an die Prozessstufe 8 gemeldet. Dabei wird durch die Meldung 17 zunächst nur ein Verweis auf die geänderten Daten 11 in den Pufferspeicher 10 eingetragen. Die Anwendung 6 kann also wie im Beispiel gezeigt, unmittelbar mit ihrer Ausführung fortfahren und weitere Änderungen 16 vornehmen. Davon unabhängig liest die zweite Prozessstufe 9 in einem Schritt 18 Einträge aus dem Pufferspeicher 10 ein. Die zugehörigen Daten 11 des lokalen Massenspeichers 3a werden dann über das Netzwerkdateisystem 14 auf den entfernten Massenspeicher 3b übertragen. Nach Bestätigung 19 der Änderung 16 auf dem entfernten Massenspeicher 3b sendet die zweite Prozessstufe 9 weitere Datenänderungen 16 an den entfernten Massenspeicher 3b.

Wird ein Punkt in der Ausführung der Anwendung 6 erreicht, an dem es erforderlich ist, dass die Daten.ll auch auf dem entfernten Massenspeicher 3b mit den Daten 11 des lokalen Massenspeichers 3a übereinstimmen, wird von der Anwendung 6 das Ende 20 der Transaktion bestimmt. Daraufhin wartet die Prozessstufe 8 auf ein Signal, welches das Ende 21 des Datenabgleichs der zweiten Prozessstufe 9 kennzeichnet. Erst daraufhin übergibt die erste Prozessstufe 8 den Kontrollfluss wieder an die Anwendung 6 durch Übersendung einer Bestätigung der Transaktion 22.

Am Beginn einer jeden Datenänderung 16, also bei einem Erstellen einer neuen Datei oder bei einer Veränderung einer bestehenden Datei, wird diese zunächst durch die Anwendung 6 in einem sogenannten Undo-Log protokolliert, sodass es möglich ist, die nachfolgende Änderung 16 zurückzunehmen, wenn die Transaktion vor der abschließenden Bestätigung 22 abgebrochen wird. Erst nach erfolgreichem Abschluss der Transaktion im Schritt 22 werden die zugehörigen Protokolleinträge gelöscht. Dadurch wird sichergestellt, dass auch beim Ausfall eines Rechners 1 während einer Transaktion bereits erfolgte, aber durch Abbruch der Transaktion ungültig gewordene Änderungen 16 durch die Anwendung 6 rückgängig gemacht werden können.

In einer vorteilhaften Ausführung der Erfindung meldet die Anwendung 6 lediglich das Ende 20 einer Transaktion an die Schnittstelle 12. Dabei wird das Ende 20 einer Transaktion automatisch als der Beginn 15 einer neuen Transaktion angesehen. Auf diese Weise kann sichergestellt werden, dass jede Änderung 16 der Daten 11 durch eine Anwendung 6 zu genau einer Transaktion gehört.

In einer weiteren vorteilhaften Ausführung der Erfindung wird die Anordnung durch eine zusätzliche Überwachungssoftware, einen sogenannten Clustermonitor erweitert. Der Clustermonitor überwacht dabei die Ausführung der Anwendung 6 auf dem jeweils aktiven Rechner 1a oder 1b und startet beim Ausfall dieses Rechners 1a oder 1b eine neue Instanz der Anwendung 6 auf dem jeweils anderen Rechner 1b oder 1a. Es ist die Aufgabe des Clustermonitors sicherzustellen, dass die Anwendung 6 zu jedem Zeitpunkt auf genau einem Rechner 1 abläuft.

Besonders einfach und vorteilhaft ist das beschriebene Verfahren beim Einsatz von zwei Rechnern. Es können aber mehr als zwei Rechner nach dem erfindungsgemäßen Verfahren betrieben werden. Allerdings wäre der Aufwand zur Synchronisation entsprechend höher.

Eine weitere vorteilhafte Ausführung der Erfindung dient zur Erhöhung der Funktionssicherheit der Anordnung. Dabei wird die Kommunikationsverbindung 2 durch mindestens zwei redundante Netzwerkverbindungen hergestellt. Dadurch wird auch beim Ausfall bzw. der Störung einer Netzwerkverbindung die Verfügbarkeit der Daten 11 auf den mindestens zwei Rechnern 1 sichergestellt.

Bezugszeichenliste
- 1: Rechner
- 2: Kommunikationsverbindung
- 3: Massenspeicher
- 4: Spiegelbild des entfernten Massenspeichers
- 5: Recheneinheit
- 6: Anwendung
- 7: Synchronisationsprozess
- 8: erste Prozessstufe
- 9: zweite Prozessstufe
- 10: Pufferspeicher
- 11: Daten
- 12: Schnittstelle
- 13: gespiegelte Daten
- 14: Netzwerkdateisystem
- 15: Beginn einer Transaktion
- 16: Datenänderung
- 17: Änderungsmeldung
- 18: Anforderung geänderter Daten
- 19: Bestätigung der entfernter Datenänderung
- 20: Ende einer Transaktion
- 21: Ende des Datenabgleichs
- 22: Bestätigung der Transaktion

## Patentansprüche

1. Verfahren zur Sicherstellung der Verfügbarkeit von Daten (11) bei einer Anordnung mit
- einem ersten Rechner (1a) und mindestens einem zweiten Rechner (1b),
- die jeweils einen lokalen, nicht-flüchtigen Massenspeicher (3a,b) aufweisen,
bei Ausfall von mindestens einem der Rechner (1),
**dadurch gekennzeichnet, dass**
- Daten (11), die in dem lokalen, nicht-flüchtigen Massenspeicher (3a) des ersten Rechners (1a) gespeichert sind, redundant in dem lokalen, nicht-flüchtigen Massenspeicher (3b) des mindestens einen zweiten Rechners (1b) abgelegt werden und eine Recheneinheit (5b) des mindestens einen zweiten Rechners (1b) Zugriff auf die redundant abgelegten Daten (11) hat, und
- Daten (11), die in dem lokalen, nicht-flüchtigen Massenspeicher (3b) des mindestens einen zweiten Rechners (1b) gespeichert sind, redundant in dem lokalen, nicht-flüchtigen Massenspeicher (3a) des ersten Rechners (1a) abgelegt werden und eine Recheneinheit (5a) des ersten Rechners (1a) Zugriff auf die redundant abgelegten Daten (11) hat.

2. Verfahren nach Anspruch 1, **dadurch gekennzeichnet, dass** eine Anwendung (6), die auf Daten (11) zugreift, die auf dem lokalen, nicht-flüchtigen Massenspeicher (3) abgelegt sind, zu jedem Zeitpunkt nur auf einem Rechner (1) der Anordnung aktiv sein darf.

3. Verfahren nach Anspruch 1, in der der erste (1a) und mindestens ein zweiter Rechner (1b) ein redundantes System bilden.

4. Verfahren nach einem der Ansprüche 1 bis 3, **dadurch gekennzeichnet,**
**dass** ein Abgleich der Datenänderungen (16) in einem zweiteiligen Verfahren (7) stattfindet, wobei der erste Verfahrensschritt (8) die auf einem Rechner (1) geänderten Daten (11) feststellt und der zweite Verfahrensschritt (9) die geänderten Daten (11) auf das redundante Abbild (13) der Daten auf dem jeweiligen anderen Rechner (1) überträgt.

5. Verfahren nach Anspruch 4, **dadurch gekennzeichnet, dass** Verweise auf die als geändert festgestellten Daten (11) in einem Pufferspeicher (10) abgelegt werden, wodurch eine Entkopplung von Datenabgleichs-Anfragen auf dem einen Rechner (1) im ersten Verfahrensschritt (8) und Datenabgleichs-Durchführung auf dem jeweils anderen Rechner (1) im zweiten Verfahrensschritt (9) bewirkt wird.

6. Verfahren nach einem der Ansprüche 1 bis 5, **dadurch gekennzeichnet, dass**
der Datenabgleich transaktionsgesteuert abläuft, indem alle Datenänderungen (16) ab Beginn (15) einer Transaktion zunächst in eine Protokolldatei eingetragen und nachfolgend ausgeführt werden. Erst nach Bestätigung (19) aller zugehörenden Änderungen (16) am Ende (20) einer Transaktion werden die durchgeführten Änderungen (16) aus der Protokolldatei entfernt, so dass alle Änderungen (16) bei einem zwischenzeitlichen Abbruch der Transaktion rückgängig gemacht werden können. Dieses Verfahren stellt sicher, dass alle Datenänderungen (16), die zu einer gemeinsamen Transaktion gehören, komplett ausgeführt werden oder komplett zurückgenommen werden.

7. Verfahren nach Anspruch 6, **dadurch gekennzeichnet, dass** die Anwendung den Beginn (15) und das Ende (20) der Transaktionen festlegt.

8. Verfahren nach einem der Ansprüche 6 oder 7, **dadurch gekennzeichnet, dass**
das Ende (20) einer ersten Transaktion den Beginn (15) einer zweiten Transaktion festlegt.

9. Rechneranordnung aufweisend mindestens zwei über eine Kommunikationsverbindung (2) gekoppelte Rechner (1),
wobei jeder der beiden Rechner (1) über mindestens einen lokalen, nicht flüchtigen Massenspeicher (3) zur Speicherung von Daten (11) verfügt und
die Rechner (1) zur Durchführung eines Datenabgleichs mit einem Verfahren nach einem der Ansprüche 1 bis 8 eingerichtet sind.

10. Rechneranordnung nach Anspruch 9, **dadurch gekennzeichnet, dass** eine zusätzliche Überwachungssoftware (Clustermonitor) die Ausführung wenigstens einer Anwendung (6) auf einem der angeschlossenen Rechner (1) überwacht und beim Ausfall des einen Rechners (1) den jeweils anderen Rechner (1) anweist die Anwendung (6) auszuführen.
